## Europäisches Patentamt
## European Patent Office
## Office européen des brevets

(11) Veröffentlichungsnummer: **0 062 838**
**B1**

# EUROPÄISCHE PATENTSCHRIFT

(45) Veröffentlichungstag der Patentschrift:
16.01.85

(21) Anmeldenummer: **82102698.6**

(22) Anmeldetag: **31.03.82**

(51) Int. Cl.⁴: **C 08 L 69/00**, C 08 L 51/04, C 08 L 25/12, C 08 L 25/08

(54) **Thermoplastische Formmassen.**

(30) Priorität: **10.04.81 DE 3114494**

(43) Veröffentlichungstag der Anmeldung:
**20.10.82 Patentblatt 82/42**

(45) Bekanntmachung des Hinweises auf die Patenterteilung:
**16.01.85 Patentblatt 85/3**

(84) Benannte Vertragsstaaten:
**DE GB NL**

(56) Entgegenhaltungen:
**DE - A - 2 329 585**
**DE - A - 2 712 171**

(73) Patentinhaber: **BASF Aktiengesellschaft, Carl-Bosch-Strasse 38, D-6700 Ludwigshafen (DE)**

(72) Erfinder: **Brandstetter, Franz, Dr., Ritterbuechel 45, D-6730 Neustadt (DE)**
Erfinder: **Hambrecht, Juergen, Dr., Werderstrasse 10, D-6900 Heidelberg (DE)**
Erfinder: **Scharf, Bernhard, Dr., Branichstrasse 3, D-6905 Schriesheim (DE)**

## Beschreibung

Die Erfindung betrifft eine thermoplastische Formmasse auf der Basis von Styrol- und Acrylnitril enthaltenden schlagzähen Polymerisaten, wie ABS, AES, ASA, und von Polycarbonaten.

Zum Stand der Technik nennen wir:
1. DE-PS Nr. 1170141
2. DE-PS Nr. 1810993
3. DE-AS Nr. 2051890
4. DE-AS Nr. 2259564
5. DE-OS Nr. 2712171

Mischungen von Styrol- und Acrylnitril enthaltenden schlagzähen Polymerisaten mit Polycarbonaten sind beispielsweise in 1, 2 und 4 und solche mit Polycarbonat/Polysulfon-Copolymerisaten in 3 beschrieben. Aus 5 sind darüber hinaus Mischungen von Polycarbonaten mit Styrol, Acrylnitril und N-Maleinimid enthaltenden schlagzähen Polymerisaten bekannt.

Diese bekannten Formmassen besitzen im allgemeinen zufriedenstellende Eigenschaften. Häufig wird aber eine höhere Zähigkeit und auch höhere Wärmeformbeständigkeit erwartet.

Aufgabe der vorliegenden Erfindung ist es also, Formmassen auf der Basis von Styrol- und Acrylnitril enthaltenden Polymerisaten und Polycarbonaten zu schaffen, die eine verbesserte Zähigkeit und Wärmeformbeständigkeit besitzen.

Diese Aufgabe wird gelöst durch die im Anspruch 1 genannten Massnahmen.

Nachstehend wird der Aufbau der Formmasse aus den Komponenten A bis E beschrieben:

*Komponente A:*

Unter Polycarbonaten A im Sinne der erfindungsgemässen Formmasse sollen Polycarbonate auf der Basis von Homopolycarbonaten und Copolycarbonaten verstanden werden. Als Bisphenole kommen dabei beispielsweise in Frage: Dihydroxydiphenyle, Bis(hydroxyphenyl)alkane, Bis-(hydroxyphenyl)ether. Es können aber auch alle anderen, für die Herstellung von Polycarbonaten geeigneten Bisphenole eingesetzt werden, wie sie u.a. in der Monographie von H. Schnell,,, Chemistry and Physics of Polycarbonates", Interscience Publishers, New York, 1964, in der US-PS Nr. 2999835 und in der DE-OS Nr. 2248817 beschrieben sind. Besonders bevorzugt sind Polycarbonate auf der Basis von 2,2-Bis-(4-hydroxyphenyl)propan. Die Synthese der Polycarbonate wird beispielsweise in der US-PS Nr. 2999835 und der GB-PS Nr.772627 beschrieben. Von der Komponente A werden 10 bis 90 Gew.-Teile, insbesondere 30 bis 80 Gew.-Teile angewendet.

*Komponente B:*

Bei der Komponente B der erfindungsgemässen Formmasse handelt es sich um ein oder mehrere bekannte Pfropfmischpolymerisate, wie sie beispielsweise in ABS, AES und ASA Verwendung finden. Von der Komponente B werden 10 bis 50 Gew.-Teile angewendet. Die zur Herstellung dieser schlagfest ausgerüsteten Pfropfmischpolymerisate verwendeten Kautschuke müssen elastomere Eigenschaften haben, damit sie eine Verbesserung der Schlagzähigkeit der erfindungsgemässen Formmasse bewirken. Unter Kautschuken sind demzufolge hochmolekulare Verbindungen zu verstehen, die eine Glastemperatur von weniger als 0°C, vorzugsweise weniger als −40°C, aufweisen (K.H. Illers, ,,Kolloid-Zeitschrift 176", Seite 110, 1961). Dabei kommen beispielsweise in Frage: Naturkautschuk, Synthesekautschuke, wie Polybutadien, Polyisopren und Copolymerisate von Butadien mit Styrol oder Acrylnitril, ferner Elastomere auf Basis von Alkylestern der Acrylsäure, wobei der Alkylrest 1 bis 8 C-Atome aufweisen kann, Copolymerisate von Alkylestern der Acrylsäure mit Butadien, Styrol, Acrylnitril und Vinylethern, Copolymerisate aus Ethylen/Propylen und einem nichtkonjugierten Dien (EPDM-Kautschuke) sowie Ethylen/Vinylacetat-Copolymere und chlorierte Polyethylene.

Die Herstellung der erfindungsgemäss anzuwendenden Komponente B kann nach bekannten Verfahren in Emulsion, Masse, Lösung und Suspension, oder nach kombinierten Verfahren, wie in Massesuspension, erfolgen. Solche Verfahren sind beispielsweise in den DE-AS Nrn. 2427960, 1911882, 1260135, 1238207, 1247021 und in der US-PS Nr. 3517774 beschrieben.

Die Herstellung des erfindungsgemäss einzusetzenden Pfropfmischpolymerisats B erfolgt i.allg. in zwei Stufen. Hierzu wird zunächst die Pfropfgrundlage $b_1$ hergestellt; auf 40 bis 80 Gew.-% dieser Pfropfgrundlage werden dann 20 bis 60 Gew.-%, bezogen auf B, einer Mischung aus Styrol und Acrylnitril aufgepfropft ($b_2$).

($b_1$) Zunächst wird in der Grundstufe ein Kautschuklatex auf herkömmliche Weise, vorzugsweise in Emulsion, hergestellt. Der Grundkautschuk ist durch seine Glastemperatur definiert, die unterhalb von −40, vorzugsweise unterhalb von −60°C liegen soll. Als Monomere werden vorzugsweise Butadien oder Gemische aus Butadien und Estern der Acrylsäure verwendet. Da für manche Zwecke Butadien/Acrylnitril-Kautschuke bzw. Terpolymerisate aus Butadien, Acrylsäureestern und Vinylalkylethern Vorteile zeigen, können auch derartige Monomerengemische eingesetzt werden. Im Falle der Herstellung von Kautschuken auf reiner Acrylatbasis werden zusätzlich zu den Acrylmonomeren noch vernetzende Monomere, wie Divinylbenzol, Diallylphthalat, Ethylenglycoldimethacrylat, Triallylcyanurat, Triallylisocyanurat, Butandioldiacrylat, Tricyclodecenylacrylat in dem Fachmann bekannten Mengen mitverwendet.

Die Polymerisation wird wie üblich durchgeführt: bei Temperaturen zwischen 30 und 90°C, in Gegenwart von Emulgatoren, wie Alkalisalzen von Alkyl- oder Alkylarylsulfonaten, Alkylsulfaten, Fettalkoholsulfonaten oder Fettsäuren mit 10 bis 30 Kohlenstoffatomen; vorzugsweise nimmt man Natriumsalze von Alkylsulfonaten oder Fettsäuren mit 12 bis 18 Kohlenstoffatomen. Die Emulgatoren werden in Mengen von 0,3 bis 5, insbesondere von 0,6 bis 2,0 Gew.-%, bezogen auf die Monomeren, verwendet. Es werden die üblichen Puffersalze, wie Natriumbicarbonat und Natriumpyrophosphat, verwendet.

Ebenso werden die üblichen Initiatoren wie Persulfate oder organische Peroxide mit Reduktionsmitteln verwendet sowie gegebenenfalls Molekulargewichtsregler, wie Mercaptane, Terpene oder dimeres $\alpha$-Methylstyrol, die am Anfang oder während der Polymerisation zugegeben werden. Das Gewichtsverhältnis Wasser zu Monomere(n) liegt vorzugsweise zwischen 2:1 und 1:1. Die Polymerisation wird so lange fortgesetzt, bis mehr als 90%, vorzugsweise mehr als 96% der Monomeren polymerisiert sind. Dieser Umsatz ist im allgemeinen nach 4 bis 20 h erreicht. Der dabei erhaltene Kautschuklatex hat in der Regel eine Teilchengrösse, die unterhalb von 0,20, vorzugsweise unter 0,15 µm liegt. Die Teilchengrössenverteilung solcher Kautschuklatizes ist verhältnismässig eng, so dass man von einem nahezu monodispersen System sprechen kann.

Vor der Pfropfung kann die den Kautschuk enthaltende Dispersion agglomeriert werden. Dies geschieht z.B. durch Zugabe einer Dispersion eines Acrylesterpolymerisates. Vorzugsweise werden Dispersionen von Copolymerisaten von Acrylestern von Alkoholen mit 1 bis 4 Kohlenstoffatomen, vorzugsweise von Alkoholen mit 1 bis 4 Kohlenstoffatomen, vorzugsweise von Äthylacrylat, mit 0,1 bis 10 Gew.-% wasserlösliche Polymerisate bildenden Monomeren, wie z.B. Acrylsäure, Methacrylsäure, Acrylamid oder Methacrylamid, N-Methylolmethacrylamid oder N-Vinylpyrrolidon, eingesetzt. Besonders bevorzugt ist ein Copolymerisat aus 96% Äthylacrylat und 4% Methacrylamid. Die Agglomerierdispersion kann gegebenenfalls auch mehrere der genannten Acrylesterpolymerisate enthalten.

Die Konzentration der Acrylesterpolymerisate in der Dispersion soll im allgemeinen zwischen 3 und 40 Gew.-% liegen. Bei der Agglomeration werden 0,2 bis 10, vorzugsweise 1 bis 5 Gew.-Teile der Agglomerierdispersion auf 100 Teile des Kautschuklatex, jeweils berechnet auf Feststoffe, eingesetzt. Die Agglomeration wird durch Zugabe der Agglomerierdispersion zum Kautschuk durchgeführt. Die Geschwindigkeit der Zugabe ist normalerweise nicht kritisch, im allgemeinen dauert sie etwa 1 bis 30 min bei einer Temperatur zwischen 20 und 90°C, vorzugsweise zwischen 30 und 75°C.

Unter den genannten Bedingungen wird nur ein Teil der Kautschukteilchen agglomeriert, so dass eine bimodale oder breite Verteilung entsteht. Dabei liegen nach der Agglomeration im allgemeinen mehr als 50, vorzugsweise zwischen 75 und 95% der Teilchen (Zahlenverteilung) im nicht agglomerierten Zustand vor. Der mittlere Durchmesser der Kautschukteilchen liegt zwischen 0,20 und 0,45, vorzugsweise zwischen 0,26 und 0,35 µm. Der erhaltene agglomerierte Kautschuklatex ist verhältnismässig stabil, so dass er ohne weiteres gelagert und transportiert werden kann, ohne dass Koagulation eintritt.

(b₂) Zur Herstellung des Pfropfmischpolymerisats B wird dann in einem zweiten Schritt in Gegenwart des so erhaltenen Latexpolymerisates $b_1$ ein Monomerengemisch aus Styrol und Acrylnitril polymerisiert, wobei das Gewichtsverhältnis von Styrol und Acrylnitril in dem Monomerengemisch im Bereich von 88:12 bis 65:35, vorzugsweise von 75:25 bis 70:30, liegen soll. Es ist vorteilhaft, diese Pfropfmischpolymerisation von Styrol und Acrylnitril auf das als Pfropfgrundlage dienende Polymerisat $b_1$ in wässeriger Emulsion unter den üblichen, oben aufgeführten Bedingungen durchzuführen. Die Pfropfmischpolymerisation kann zweckmässig im gleichen System erfolgen wie die Emulsionspolymerisation zur Herstellung der Pfropfgrundlage $b_1$, wobei, falls notwendig, weiterer Emulgator und Initiator zugegeben werden kann. Das aufzupfropfende Monomerengemisch aus Styrol und Acrylnitril kann dem Reaktionsgemisch auf einmal, in mehreren Stufen oder vorzugsweise kontinuierlich während der Polymerisation zugegeben werden. Die Pfropfmischpolymerisation wird so geführt, dass ein Pfropfgrad von 20 bis 60, vorzugsweise von 30 bis 50 Gew.-% im Pfropfmischpolymerisat B resultiert. Da die Pfropfausbeute bei der Pfropfmischpolymerisation nicht 100%ig ist, muss eine etwas grössere Menge des Monomerengemisches aus Styrol und Acrylnitril bei der Pfropfmischpolymerisation eingesetzt werden, als es dem gewünschten Pfropfgrad entspricht. Die Steuerung der Pfropfausbeute bei der Pfropfmischpolymerisation und somit des Pfropfgrades des fertigen Pfropfmischpolymerisats B ist jedem Fachmann geläufig und kann beispielsweise u.a. durch die Dosiergeschwindigkeit der Monomeren oder durch Reglerzugabe erfolgen (Chauvel, Daniel, „ACS Polymer", Preprints 15 [1974], Seite 329 ff.). Bei der Emulsionspfropfmischpolymerisation entstehen im allgemeinen etwa 5 bis 15 Gew.-%, bezogen auf das Pfropfmischpolymerisat B, an freiem, ungepfropftem Styrol/Acrylnitril-Copolymerisat. Dieser Anteil wird im Sinne der vorliegenden Erfindung bei der Komponente C berücksichtigt.

Die Komponenten B und C können aber auch gegebenenfalls gemeinsam in Lösung, Masse, Suspension und Dispersion hergestellt werden. Dies gilt vor allem, wenn als Kautschukkomponente Terpolymere auf Basis von Ethylen, Propylen und Dienen (EPDM) verwendet werden, wie es beispielsweise in der US-Patentschrift Nr. 3515774 und in der DE-AS Nr. 1247021 beschrieben wird.

*Komponente C:*

Die in den erfindungsgemässen Formmassen in einem Anteil von 0,5 bis 80 Gew.-Teilen enthaltene Komponente C ist eine Hartkomponente aus einem oder mehreren Copolymerisaten von Styrol und/oder $\alpha$-Methylstyrol mit Acrylnitril. Der Acrylnitrilgehalt in diesen Copolymerisaten der Hartkomponente C soll 20 bis 40, vorzugsweise 25 bis 35 Gew.%, bezogen auf das jeweilige Copolymerisat der Hartkomponente, betragen. Zu dieser Hartkomponente C zählen auch, wie weiter oben erläutert, die bei der Herstellung der Komponente B entstehenden freien, nicht gepfropften Styrol/Acrylnitril-Copolymerisate. Je nach den bei der Pfropfmischpolymerisation gewählten Bedingungen kann es möglich sein, dass dabei schon ein hinreichender Anteil an Hartkomponente C gebildet wird. Im allgemeinen wird es jedoch nötig sein, die bei der Pfropfmischpolymerisation erhaltenen Produkte mit zusätzlicher, separat hergestellter Hartkomponente C zu mischen. Bei der separat hergestellten Hartkomponente C kann es sich um ein Styrol/Acrylnitril-Copolymerisat, ein α-Methylstyrol/Acrylnitril-Copolymerisat oder ein α-Methylstyrol/Styrol/Acrylnitril-Terpolymerisat handeln. Diese Copolymerisate können einzeln oder auch in Mischung miteinander für die Hartkomponente eingesetzt werden. Beispielsweise kann die Hartkomponente C eine Mischung aus einem Styrol/Acrylnitril-Copolymerisat und einem α-Methylstyrol/Acrylnitril-Copolymerisat sein. In dem Fall, in dem die Hartkomponente C der erfindungsgemässen Massen aus einer Mischung von einem Styrol/Acrylnitril-Copolymerisat und einem α-Methylstyrol/Acrylnitril-Copolymerisat besteht, soll der Acrylnitrilgehalt der beiden Copolymerisate tunlichst nicht mehr als 10, vorzugsweise nicht mehr als 5 Gew.-%, bezogen auf das Copolymerisat, voneinander abweichen.

Die Hartkomponente C kann nach den herkömmlichen Methoden erhalten werden. So kann die Copolymerisation des Styrols und/oder α-Methylstyrols mit dem Acrylnitril in Masse, Lösung, Suspension oder wässeriger Emulsion durchgeführt werden.

Die Hartkomponente C hat vorzugsweise eine Viskositätszahl von 40 bis 100, insbesondere von 50 bis 85 ml/g. Die Bestimmung der Viskositätszahl erfolgt analog DIN 53 726; dabei werden 0,5 g Material in 100 ml Dimethylformamid gelöst.

*Komponente D:*

Die in den erfindungsgemässen Formmassen in einem Anteil von 0,1 bis 5 Gew.-Teilen (vorzugsweise 0,5 bis 2 Gew.-Teilen) enthaltene Komponente D ist mindestens ein Terpolymerisat aus Styrol, Acrylsäure und Maleinsäureanhydrid, wobei der Styrolanteil von 55 bis 65, der Acrylsäureanteil von 5 bis 20 und der Maleinsäureanhydridanteil von 15 bis 40 Gew.-%, jeweils bezogen auf das Terpolymerisat, beträgt. Die Molekulargewichte der Terpolymerisate liegen im allgemeinen zwischen 500 und 20 000 (osmometrisch gemessen). Vorzugsweise liegen die Molekulargewichte im Bereich von 500 bis 7000, insbesondere von 800 bis 2000. Die Herstellung dieser Terpolymerisate ist bekannt. Sie wird vorzugsweise durch radikalische Polymerisation der Monomeren in Lösung oder Masse vorgenommen, wie es beispielsweise in der DE-OS Nr. 2304535 und der DE-PS Nr. 2502172 beschrieben ist.

*Komponente E:*

Die erfindungsgemässen Formmassen können als weitere Komponente E alle Zusatzstoffe enthalten, wie sie für ABS-Polymerisate und Polycarbonate üblich und gebräuchlich sind. Als solche Zusatzstoffe seien beispielsweise genannt: Füllstoffe, weitere Polymere, Farbstoffe, Pigmente, Antistatika, Antioxidantien, Flammschutzmittel und Schmiermittel. Die Zusatzstoffe werden in üblichen und wirksamen Mengen, vorzugsweise in Mengen von 0,1 bis zu insgesamt etwa 30 Gew.-%, bezogen auf die Mischung (A + B + C + D), eingesetzt.

Das Mischen der Komponenten A, B, C und D kann nach allen bekannten Methoden erfolgen. Vorzugsweise geschieht jedoch das Mischen der Komponenten A, B, C und D durch gemeinsames Extrudieren, Kneten oder Verwalzen der Komponenten, wobei die Komponenten notwendigenfalls zuvor aus der bei der Polymerisation erhaltenen Lösung oder wässeriger Dispersion isoliert worden sind. Die in wässeriger Dispersion erhaltenen Produkte der Pfropfmischpolymerisation (Komponente B) können auch nur teilweise entwässert werden und als feuchte Krümel mit dem Polycarbonat A und den Komponenten C, D vermischt werden, wobei dann während des Vermischens die vollständige Trocknung der Pfropfmischpolymerisate erfolgt.

Die erfindungsgemässen Formmassen können nach den bekannten Verfahren der Thermoplastverarbeitung bearbeitet werden, also z.B. durch Extrudieren, Spritzgiessen, Kalandrieren, Hohlkörperblasen, Pressen oder Sintern; besonders bevorzugt werden aus den nach dem erfindungsgemässen Verfahren hergestellten Formmassen Formteile durch Spritzgiessen für den Automobilbau hergestellt.

Die in den Beispielen und Vergleichsversuchen aufgeführten Produkteigenschaften wurden wie folgt gemessen:

1. Die Ermittlung der Pfropfausbeute und somit des Anteils des Pfropfmischpolymerisats B in dem bei der Pfropfmischpolymerisation erhaltenen Produkt erfolgte durch Extraktion dieses Polymerisationsproduktes mit Methylethylketon bei 25°C. Der Pfropfgrad der Pfropfmischpolymerisate, d.h. der prozentuale Anteil vom im Pfropfmischpolymerisat enthaltenen gepfropften Styrol und Acrylnitril, ergibt sich am einfachsten aus der elementaranaytischen Bestimmung von Stickstoff (aus Acrylnitril) und Sauerstoff (aus Acrylester) im in Methylethylketon unlöslichen Gel.

2. Die Viskositätszahl der Hartkomponente wurde in Dimethylformamid bei T = 30°C analog DIN 53 726 gemessen.

3. Die Ermittlung der Glasübergangstemperatur der Kautschuke kann z.B. nach der DSC-Methode (K.M. Illers, „Makromol Chemie 127" [1969], Seite 1) erfolgen.

4. Das Molekulargewicht des Terpolymerisates D wurde in 0,1gew.-%iger acetonischer Lösung bei 37°C im Mechrolab-Osmometer bestimmt.

5. Die Kerbschlagzähigkeit, $a_K$, wurde bei 23°C nach DIN 53 453 bestimmt.

6. Die Wärmeformbeständigkeit, Vicat B, wurde nach DIN 53 460 ermittelt.

Es zeigte sich nun, dass die erfindungsgemässen Formmassen eine verbesserte Zähigkeit und Wärmeformbeständigkeit, verglichen mit den Werten herkömmlicher ABS/Polycarbonat-Mischungen, aufweisen.

Die Erfindung wird durch die nachfolgenden Beispiele näher erläutert. Die in den Beispielen genannten Teile und Prozente beziehen sich, sofern nicht anders angegeben, auf das Gewicht.

*Beispiele 1 und 2 und Vergleichsversuche I und II*

Die in der Tabelle angebegenen Teile der Komponenten A bis D werden auf einem Mischextruder bei 260°C aufgeschmolzen, gemischt und anschliessend granuliert.

Als Komponente A wurde ein Polycarbonat auf der Basis von 2,2-Bis-(4-hydroxyphenyl)propan mit einer relativen Viskosität von 1,32 (gemessen an einer 0,5%igen Lösung in Methylenchlorid) eingesetzt.

. Als Komponente B wurde folgendes Pfropfmischpolymerisat verwendet: Pfropfmischpolymerisat, bei dem auf 60 Gew.-Teilen eines Polybutadienkautschuks mit einer mittleren Teilchengrösse von 0,3 µm 40 Gew.-Teile einer Mischung aus Styrol/Acrylnitril im Gew.-Verhältnis 70 : 30 aufgepfropft sind. Das Pfropfmischpolymerisat enthielt 5 Gew.-% nicht gepfropfte Komponente C.

Als Komponente C wurde ein Styrol/Acrylnitril-Copolymerisat mit einem Acrylnitrilanteil von 35 Gew.-% und einer Viskositätszahl von 80 ml/g eingesetzt.

Die Komponente D wird folgendermassen hergestellt:

Eine Mischung aus 60 Teilen Styrol, 10 Teilen Acrylsäure und 30 Teilen Maleinsäureanhydrid wird kontinuierlich einer Polymerisationseinrichtung zugeführt, die aus einem Druckkessel mit einem nachgeschalteten mit statischen Mischelementen versehenen Druckrohr besteht. Die Polymerisation wird bei einer Temperatur von 260°C durchgeführt. Am Reaktorausgang wird das Copolymerisat abgezogen. Die durchschnittliche Verweilzeit der Monomeren in der Polymerisationszone beträgt 15 min. Der Druck in der Polymerisationszone wird bei 25 bar gehalten.

Der Feststoffgehalt der entstehenden Polymerschmelze beträgt 99,3%. Die restlichen Monomeren werden bei einem Druck von 5 bis 20 Torr und Temperaturen zwischen 150 und 200°C in einer Entgasungsvorrichtung entfernt. Das Polymerisat hat ein Molekulargewicht von 1700.

Aus den Mischungen wurden bei 250°C mittels einer Spritzgussmaschine Prüfkörper hergestellt, an denen die Kerbschlagzähigkeit bei 23°C und die Wärmeformbeständigkeit, Vicat B, ermittelt wurden.

*Tabelle*

| Beispiele (erfindungs- gemäss) | Komponente A (Teile) | Komponente B (Teile) | Komponente C (Teile) | Komponente D (Teile) | Erweichungs- punkt nach Vicat (°C) | Kerbschlag- zähigkeit bei 23°C (kJ/m²) |
|---|---|---|---|---|---|---|
| 1 | 40 | 26,5 | 32,5 | 1 | 111 | 35,1 |
| 2 | 60 | 17,5 | 21,5 | 1 | 125 | 43,4 |
| Vergleichs- versuche | | | | | | |
| I | 40 | 27 | 33 | 0 | 109 | 22,4 |
| II | 60 | 18 | 22 | 0 | 116 | 32,1 |

**Patentansprüche**

1. Thermoplastische Formmasse, enthaltend im wesentlichen

A 10 bis 90 Gew.-Teile mindestens eines Polycarbonates,

B 10 bis 50 Gew.-Teile mindestens eines Pfropfmischpolymerisates, das gebildet wird aus

$b_1$ 40 bis 80 Gew.-%, bezogen auf (B), mindestens eines Kautschuks, dessen Glastemperatur unterhalb von 0°C liegt, worauf

$b_2$ 20 bis 60 Gew.-%, bezogen auf (B), einer Mischung von Styrol und Acrylnitril im Gewichtsverhältnis von 88 : 12 bis 65 : 35 aufgepfropft sind,

C 0,2 bis 80 Gew.-Teile einer gegebenenfalls. separat hergestellten Hartkomponente aus mindestens einem Copolymerisat von Styrol und/oder α-Methylstyrol mit Acrylnitril, wobei das Copolymerisat 20 bis 40 Gew.-%, bezogen auf das Copolymerisat, Acrylnitril einpolymerisiert enthält,

D 0,1 bis 5 Gew.-Teile mindestens eines Terpolymerisates, aufgebaut aus den Monomeren Styrol, Acrylsäure und Maleinsäureanhydrid, wobei der Styrolanteil im Bereich von 55 bis 65, der Acrylsäureanteil im Bereich von 5 bis 20 und der Maleinsäureanhydridanteil im Bereich von 15 bis 40 Gew.-%, jeweils bezogen auf das Terpolymerisat, liegt sowie gegebenenfalls enthaltend

E übliche Zusatzstoffe in wirksamen Mengen.

2. Formteile aus Formmassen gemäss Anspruch 1.

**Claims**

1. A thermoplastic moulding composition consisting essentially of

A 10 to 90 parts by weight of at least one polycarbonate,

B 10 to 50 parts by weight of at least one graft copolymer obtained by grafting onto

b$_1$  40 to 80% by weight, based on (B), of at least one rubber, the glass transition temperature of which is below 0°C,

b$_2$  20 to 60% by weight, based on (B), of a mixture of styrene and acrylonitrile in a weight ratio of 88:12 to 65:35,

C  0.2 to 80 parts by weight of a hard component, which may have been prepared separately and consists of at least one copolymer of styrene and/or α-methylstyrene with acrylonitrile, the copolymer containing from 20 to 40% by weight of acrylonitrile units,

D  0.1 to 5 parts by weight of at least one terpolymer derived from the monomers styrene, acrylic acid and maleic anhydride, the amount of styrene being from 55 to 65, the amount of acrylic acid being from 5 to 20, and the amount of maleic anhydride being from 15 to 40% by weight, the weight percentages being based in each case on the terpolymer, and optionally

E  conventional additives in effective amounts.

2.  Mouldings produced from a moulding composition as claimed in Claim 1.

**Revendications**

1.  Matières à mouler thermoplastiques, contenant essentiellement

A  10 à 90 parties en poids d'au moins un polycarbonate,

B  10 à 50 parties en poids d'au moins un copolymère greffé qui est formé de

b$_1$  40 à 80% en poids, sur la base de (B), d'au moins un caoutchouc dont la température de vitrification se situe au-dessous de 0°C et sur lequel sont greffés

b$_2$  20 à 60% en poids, sur la base de (B), d'un mélange de styrène et d'acrylonitrile dans un rapport pondéral de 88 : 12 à 65 : 35,

C  0,2 à 80 parties en poids d'un constituant dur, préparé éventuellement en une opération séparée à partir d'au moins un copolymère de styrène et/ou d'α-méthylstyrène avec l'acrylonitrile, le copolymère contenant en liaison polymère 20 à 40% en poids, sur la base du copolymère, d'acrylonitrile,

D  0,1 à 5 parties en poids d'au moins un terpolymère composé des monomères styrène, acide acrylique et anhydride maléique, la proportion de styrène se situant dans la gamme de 55 à 65, celle de l'acide acrylique dans la gamme de 5 à 20 et celle de l'anhydride maléique dans la gamme de 15 à 40% en poids, sur la base du terpolymère, et contenant, le cas échéant,

E  des adjuvants usuels en quantités efficaces.

2.  Pièces moulées, obtenues à partir de matières à mouler selon la revendication 1.